# EUROPÄISCHE PATENTSCHRIFT

(11) **EP 1 067 019 B1**
(45) Veröffentlichungstag und Bekanntmachung des Hinweises auf die Patenterteilung: **29.09.2004**
(21) Anmeldenummer: 00112996.4
(22) Anmeldetag: 21.06.2000
(51) Int. Cl.: B60R 1/12, B60R 11/02

(54) **Dachmodul mit Rückspiegel**
Roof module with integrated rearview mirror
Module de toit incorporant un rétroviseur

(30) Priorität: 06.07.1999 DE 19931023
(43) Veröffentlichungstag der Anmeldung: 10.01.2001
(73) Patentinhaber: Volkswagen Aktiengesellschaft, 38436 Wolfsburg (DE)
(72) Erfinder: Hackenberg, Ulrich, Dr., 85139 Wettstetten (DE)

(56) Entgegenhaltungen:
- EP-A- 0 285 589
- DE-A- 4 329 983
- DE-A- 19 530 617
- US-A- 5 331 525
- PATENT ABSTRACTS OF JAPAN vol. 1999, no. 03, 31. März 1999 (1999-03-31) & JP 10 324196 A (KOJIMA PRESS CO LTD), 8. Dezember 1998 (1998-12-08)
- PATENT ABSTRACTS OF JAPAN vol. 011, no. 238 (M-613), 5. August 1987 (1987-08-05) & JP 62 050223 A (FUJI HEAVY IND LTD), 4. März 1987 (1987-03-04)

## Beschreibung

Die Erfindung betrifft ein Dachmodul, ausgebildet als sichtbarer Teil eines Himmels eines Kraftfahrzeuges, mit einem sich zwischen einer Windschutzscheibe und einem inneren Rückspiegel erstreckenden Gehäuseschenkel, gemäß den Oberbegriff der Anspruchs 1, wie es aus der EP-A-285 589 bekannt geworden ist.

Aus der DE 196 53 431 A1 ist ein Dachmodul und eine Baustruktur für den Zusammenbau desselben bekannt, wobei das Dachmodul eine Montageplatte aufweist, an welcher eine Reihe innerer Einrichtungen und Zubehörteile montiert sind und welches eine geeignete Form aufweist, um sich an das Vorderende des Daches eines Kraftfahrzeuges an der Fahrerseite montieren zu lassen. Dabei ist das Dachmodul entweder an der Stirnseite des Himmels anstoßend befestigt oder an dem vorderen Ende des Himmels angeordnet, um mit diesem integriert vereinigt zu werden. Zusammen mit einem Rückspiegel und einer Sonnenblende soll es eine einheitliche Baugruppe bilden, welche an der Innenseite des Daches des Kraftfahrzeuges montierbar ist. Dabei wird in beiden Fällen darauf geachtet, daß die innere Oberfläche, also die vom Fahrzeuginneren her als im Himmel anzusehende Fläche, auf der Montageplatte mit einer Stoffbespannung versehen wird, damit der Himmel als Einheit erscheint. Dabei kann diese Montageplatte eine Reihe von Funktionselementen aufnehmen, während der Rückspiegel, z.B. ein elektrisch verstellbarer Rückspiegel, wie üblich an einem Halter von der Windschutzscheibe und dem Dach beabstandet ist. Die üblichen Sonnenblenden umschließen teils den Spiegel, lassen aber im wesentlichen den Raum oberhalb des Spiegels zur Windschutzscheibe hin frei.

In der DE 43 299 83 A1 wird ein Dachmodul offenbart, das im Bereich einer Scheibe des Kraftfahrzeuges an einer möglichst nichtstörenden Stelle plaziert ist, beispielsweise im Bereich der Windschutzscheibe in dem Raum bis zum Innenspiegel hin, welcher für die normale Durchsicht währen der Fahrt nicht benötigt wird. Damit deckt er diesen Raum oberhalb des Spiegels ab, so daß eine Blendung des Fahrers bei tiefstehender Sonne in diesem Bereich verhindert wird. Dieses Dachmodul dient der Aufnahme einer Reihe von Sensoren, z.B. für Regen, Beleuchtungsstärke, Infrarotschließeinrichtung, Mikrowellenantenne, Crash-Kamera, Kompaß u.ä.. Außerdem sind in die kompakte bauliche Einheit des Dachmoduls wahlweise zusätzliche Anzeigen und/oder Bedienelemente integriert. Dieses Dachmodul kann auf der Innenseite des Kraftfahrzeuges im Dachbereich angeordnet und an geeigneter Stelle am Dach befestigt werden. Von diesem Himmelteil des Dachmoduls aus erstreckt sich ein Gehäuseschenkel bis in den oberen Teil der Windschutzscheibe hinter dem Innenspiegel. Der Innenspiegel selbst ist mittels üblichem Abstandshalter vor dem Dachmodul plaziert und mit entsprechendem Gelenk für das Ausrichten der Spiegelfläche ausgestattet.

Ausgehend von diesem Stand der Technik ergibt sich für die vorliegende Erfindung das Problem, die Vorteile des Standes der Technik, insbesondere die Modulbauweise und die Plazierung hinter dem Spiegel zu verwenden, aber dieses Modul optisch und sicherheitstechnisch zu verbessern.

Das Problem wird erfindungsgemäß durch die Merkmale des Anspruches 1 gelöst. Weiterbildungen der Erfindung sind in den Unteransprüchen erfaßt.

Erfindungsgemäß wird ein Dachmodul gemäß Anspruch 1 ausgebildet.

Dazu wird gemäß einer Weiterbildung der Erfindung die Außenkontur des Dachmoduls bzw. seines Gehäuseschenkels, gesehen als Projektion auf eine ebene Fläche, so gestaltet, daß die seitliche Kontur des Dachmoduls in etwa mit der seitlichen Kontur bzw. den Kanten der seitlich des Moduls anzuordnenden Sonnenblenden komplementär übereinstimmt.
Damit wird erreicht, daß kaum Lücken zwischen den hochgeklappten bzw. heruntergeklappten Sonnenblenden und dem so gestalteten Dachmodul entstehen und somit eine Sonneneinstrahlung einerseits maximal abgeschattet wird und andererseits im hochgeklappten Zustand die Sonnenblenden sich in etwa an die Kontur des Dachmoduls anschmiegen.

Damit die Blendwirkung komplett vermieden wird, soll auch bei komplett bis an die Windschutzscheibe heruntergeklappten Sonnenblenden eine Sonneneinstrahlung vermieden werden. Dazu wird der Gehäuseschenkel so gestaltet, daß er den Raum zwischen der Windschutzscheibe und dem Spiegel möglichst voll ausfüllt. Außerdem ist dadurch viel Platz gegeben, um die entsprechenden Sensoren, wie sie für sich vom zuvor genannten Stand der Technik her bekannt sind, in dem Gehäuseschenkel zu plazieren. Bei Bedarf kann natürlich der Gehäuseschenkel auch so gestaltet werden, daß Sensoren auf der der Windschutzscheibe zugewandten Seite auf dem Gehäuseschenkel angebracht sind oder zumindestens eine Öffnung in der Gehäusewand haben, die der Einwirkung auf die Sensoren dient.

Da eine manuelle Verstellung bei Integration des Rückspiegels in den Gehäuseschenkel umständlich wäre bzw. bei einer entsprechenden Manipulation die Rückspiegelfläche durch Fingerspuren verunreinigt werden könnte, wird vorteilhafterweise der Rückspiegel elektrisch verstellbar ausgebildet.

Der Rückspiegel an sich ist so in eine zum Fahrzeuginneren hin durch den Gehäuseschenkel gebildete Stirnfläche integriert, daß er auch in Kippstellung mit der Stirnfläche des Gehäuses abschließt oder diese maximal knapp überragt. Durch die Integration des Rückspiegels in dem Gehäuseschenkel kann auch keine unbeabsichtigte Verstellung des Spiegels von Hand mehr erfolgen, so daß der Fahrer nach erneutem Besteigen des Fahrzeuges seine einmal eingestellte Spiegelposition wieder vorfindet.

Wenn das Gehäuse, wie es der Fachmann vorsehen wird, aus einem der Sicherheit der Fahrzeuginsassen dienenden Kunststoffschale oder ähnlich gepolstertem Material besteht, kann sich kein Fahrzeuginsasse an scharfen Spiegelkanten mehr verletzten, und auch eine Zerstörung des Rückspiegels durch aufprallende Fahrzeuginsassen scheint weitgehendst ausgeschlossen.

Zur Vervollständigung ist in dem, einen Teil des Himmels bildenden, Dachmodul eine Beleuchtungseinrichtung integriert, die als Leselampe oder als Beleuchtung für den Spiegel dient.

Das Dachmodul kann - wie vom Stand der Technik für sich bekannt - durch weitere Bedienelemente und Anzeigen erganzt sein.

Anhand einer Zeichnung, die schematisch zwei Auführungsformen des Dachmoduls darstellt, wird die Erfindung näher erläutert. Im folgenden sind identische oder gleichwirkende Bauteile mit denselben Bezugsziffern versehen. Die geringfügigen Unterschiede der Bedeutung werden in der Beschreibung erläutert.

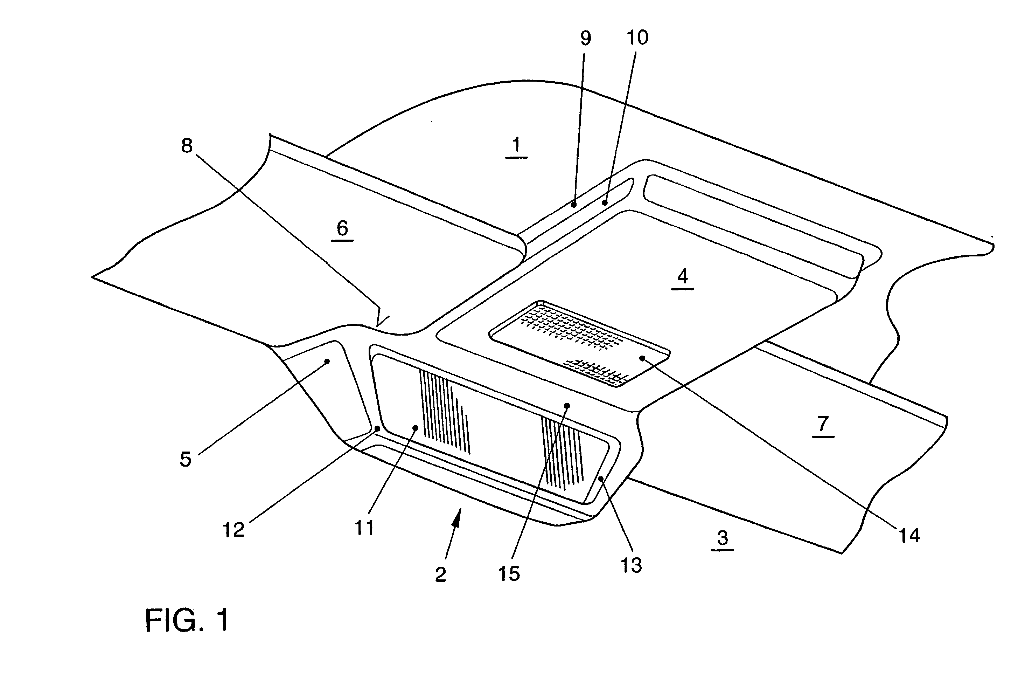

Fig. 1 zeigt ein spiegelbildlich pultförmiges Dachmodul 2 mit dem Himmelteil 4, welches einerseits integraler Bestandteil des Himmels 1 und andererseits auf die Windschutzscheibe 3 aufgesetzt ist. Links und rechts des Dachmoduls 2 schmiegen sich an die Kante 9 des Dachmoduls die Sonnenblenden 6 und 7 mit ihren zur Kante 9 des Dachmoduls komplementär geformten Kanten 8 an das Dachmodul an, wenn sie an den Himmel 1 geklappt sind. Es ist deutlich zu erkennen, daß die Kante 8 der Sonnenblende 6 so gestaltet ist, daß sie knapp an der Seitenfläche 5 des Gehäuseschenkels 15 entlanggleitet und somit die Windschutzscheibe 3 fast spaltlos zur Seitenwand 5 des Gehäuseschenkels 15 abblenden kann, wenn sie heruntergeklappt ist. In der dargestellten Stellung kann die Sonnenblende 6 in eine Rastnute 10 ziehen, am Himmelteil 4 des Dachmoduls 2 einrasten. In dem Gehäuseschenkel 15 ist der Spiegel 11 so integriert, daß er durch eine gepolsterte Kante 12 umschlossen wird und von der Stirnfläche des Schenkels 15 geringfügig weg in einer Vertiefung 13 des Gehäuseschenkels 15 plaziert ist. Selbst wenn der durch einen nicht dargestellten Elektromotor manipulierte Spiegel 11 in eine Kippstellung gerät, überragen die Kanten des Spiegels 11 die gepolsterte Kante 12 des Gehäuseschenkels gar nicht oder maximal um einen geringen Betrag. Ergänzt wird der Himmelteil 4 des Dachmoduls 2 durch eine Beleuchtungseinrichtung 14.

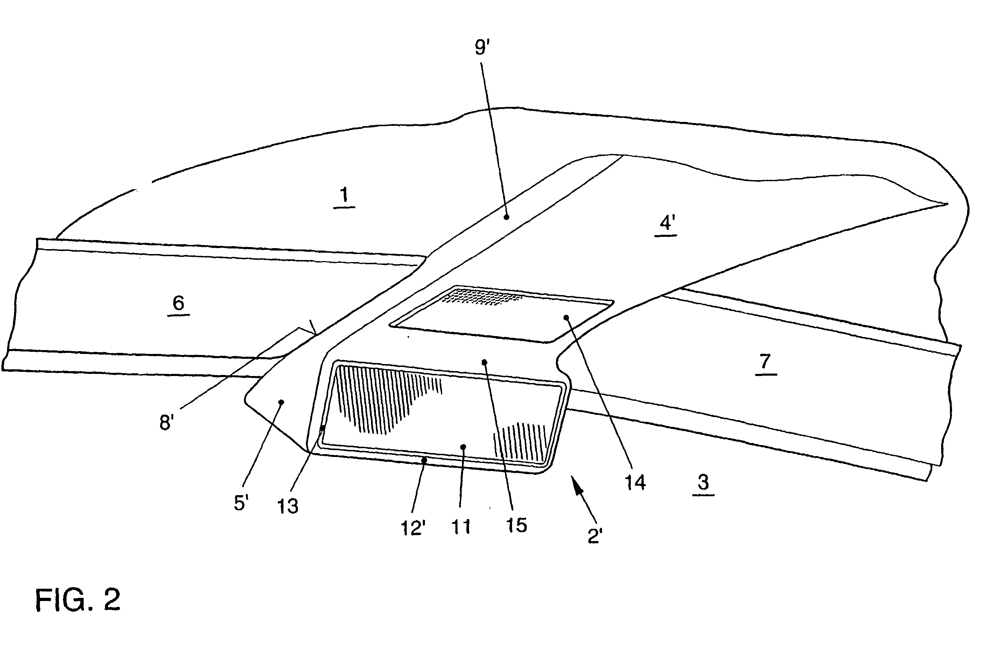

Fig. 2 zeigt einen Aufbau eines Dachmoduls 2' in ähnlicher Weise wie gemäß Fig. 1 mit denselben Bauteilen sowie dessen Integration in den Himmel 1 des Pkw-Daches und der Anordnung zwischen den Sonnenblenden 6 und 7. Auch hier schmiegt sich die Kante 8' der Sonnenblende 6 eng an die Kante 9' des Dachmoduls an, sowohl in der dargestellten Klappstellung zum Himmel hin als auch in einer nichtdargestellten Klappstellung zur Windschutzscheibe 3 hin. Dazu ist auch die Seitenfläche 5' des Dachmoduls 2', genauer des Schenkels 15 des Dachmoduls, komplementär zu der Kante der Sonnenblende 6 gestaltet. In diesem Fall erstreckt sich der Schenkel 15 des Dachmoduls 2' vom Himmelteil 4 her entlang der Windschutzscheibe 3, so daß die Tiefe des Schenkels 15 größer gestaltet ist als in dem Beispiel der Fig. 1. Das Himmelteil 4' ist hier als langgestrecktes Formteil in den Himmel 1 eingesetzt bzw. mit diesem gemeinsam als einstückiges Bauteil hergestellt worden. Insgesamt ist hier der Spiegel 11 mit einer schmalen Umrahmung 12' versehen, was dem gesamten Dachmodul ein an den Himmel 1 angepaßtes Aussehen verleiht, wodurch die optische Täuschung hervorgerufen wird, daß das Dachmodul 2' integraler Bestandteil des Daches 1 bzw. in Kombination damit der Sonnenblenden 6 und 7 ist.

### BEZUGSZEICHENLISTE

- 1: Himmel
- 2, 2': Dachmodul
- 3: Windschutzscheibe
- 4, 4': Himmelteil
- 5, 5': seitliche Außenkontur
- 6, 7: Sonnenblenden
- 8, 8': Kanten
- 9, 9': seitliche Außenkontur
- 10: Rastnute
- 11: Rückspiegel
- 12, 12': Stirnfläche
- 13: Vertiefung
- 14: Beleuchtungseinrichtung
- 15: Gehäuseschenkel

## Patentansprüche

1. Dachmodul mit einem sich zwischen einer Windschutzscheibe und einem inneren Rückspiegel erstreckenden Gehäuseschenkel,
wobei der Gehäuseschenkel (15) zugleich ein den Rückspiegel (11) umrahmendes Gehäuse bildet,
die Projektion der seitlichen Außenkontur (9, 9'; 5, 5') des Dachmoduls komplementär zur Projektion der Kanten (8, 8') von seitlich zu ihm angeordneten Sonnenblenden (6, 7) ausgebildet ist und
die Kanten (8, 8') der Sonnenblenden (6, 7) so gestaltet sind, daß sie knapp an der Seitenfläche (5) des Gehäuseschenkels (15) entlanggleiten und somit die Windschutzscheibe (3) fast spaltlos zur Seitenwand (5) des Gehäuseschenkels (15) abblenden, wenn sie heruntergeklappt sind, wobei das Dachmodul als sichtbares komplementäres Teil (2,2') in einen als Formteil ausgebildeten Himmel (1) eines Kraftfahrzeugs integrierbar ist,
**dadurch gekennzeichnet, daß**
das Dachmodul mit einem Himmelteil (4) ausgebildet ist,
die Sonnenblenden (6, 7) sich links und rechts des Dachmoduls (2) an eine Kante (9) des Dachmoduls (2) mit ihren zur Kante (9) des Dachmoduls (2) komplementär geformten Kanten (8) an das Dachmodul (2) anschmiegen, wenn sie an den Himmel (1) geklappt sind und
die Sonnenblenden (6, 7) in eine Rastnute (10), am Himmelteil (4) des Dachmoduls (2) einrasten, wenn sie an den Himmel (1) geklappt sind.

2. Dachmodul nach Anspruch 1,
**dadurch gekennzeichnet, daß**
der Gehäuseschenkel (15) den Raum zwischen Windschutzscheibe (3) und Spiegel (11) ausfüllt.

3. Dachmodul nach Anspruch 1 oder 2,
**dadurch gekennzeichnet, daß**
vorzugsweise sein Gehäuseschenkel (15) der Aufnahme von Sensoren für Regen, Abblendung und ähnliches dient.

4. Dachmodul nach einem der Ansprüche 1 bis 3,
**dadurch gekennzeichnet, daß**
der Rückspiegel (11) elektrisch verstellbar ausgebildet ist.

5. Dachmodul nach einem der Ansprüche 1 bis 7,
**dadurch gekennzeichnet, daß**
es zum Fahrzeuginneren hin eine Stirnfläche (12, 12') bildet, in die der Rückspiegel (11) derart integriert ist, daß er in Kippstellung diese maximal knapp überragt.

6. Dachmodul nach einem der Ansprüche 1 bis 5,
**dadurch gekennzeichnet, daß**
eine Beleuchtungseinrichtung (14) in seinem Himmelteil (4, 4') integriert ist.

## Claims

1. Roof module having a housing leg which extends between a windscreen and an inner rearview mirror, the housing leg (15) at the same time forming a housing which frames the rearview mirror (11), the projection of the lateral outer contour (9, 9'; 5, 5') of the roof module being formed in a manner complementary to the projection of the edges (8, 8') of sun visors (6, 7) arranged laterally to the roof module, and the edges (8, 8') of the sun visors (6, 7) being designed in such a manner that they just slide along the side surface (5) of the housing leg (15) and therefore screen the windscreen (3) virtually without any gap to the sidewall (5) of the housing leg (15) when they are folded downwards, the roof module being able to be integrated as a visible, complementary part (2, 2') into a roof lining (1), which is designed as a shaped part, of a motor vehicle, **characterized in that** the roof module is constructed with a roof lining part (4), the sun visors (6, 7) nestle with their edges (8), which are shaped in a complementary manner with respect to the edge (9) of the roof module (2), against the roof module (2) at an edge (9) of the roof module (2) on the left and right of the roof module (2) when they are folded against the roof lining (1), and the sun visors (6, 7) latch into a latching groove (10) on the roof lining part (4) of the roof module (2) when they are folded against the roof lining (1).

2. Roof module according to Claim 1, **characterized in that** the housing leg (15) fills the space between the windscreen (3) and mirror (11).

3. Roof module according to Claim 1 or 2, **characterized in that** its housing leg (15), preferably, serves to accommodate sensors for rain, dipping of lights, and the like.

4. Roof module according to one of Claims 1 to 3, **characterized in that** the rearview mirror (11) is designed to be electrically adjustable.

5. Roof module according to one of Claims 1 to 4, **characterized in that** it forms an end surface (12, 12') towards the vehicle interior, in which surface the rearview mirror (11) is integrated in such a manner that, in the tilted position, it protrudes at maximum just above the said end surface.

6. Roof module according to one of Claims 1 to 5, **characterized in that** an illuminating device (14) is integrated in its roof lining part (4, 4').

## Revendications

1. Module de toit avec une branche de boîtier s'étendant entre un pare-brise et un rétroviseur intérieur,
dans lequel la branche de boîtier (15) forme en même temps un boîtier encadrant le rétroviseur (11),
la projection du contour extérieur latéral (9, 9'; 5, 5') du module de toit étant réalisée de manière complémentaire à la projection des arêtes (8, 8') de pare-soleil (6, 7) disposés latéralement par rapport à lui et
les arêtes (8, 8') des pare-soleil (6, 7) sont configurées de telle sorte qu'elles glissent étroitement contre la face latérale (5) de la branche de boîtier (15) et donc raccordent le pare-brise (3) pratiquement sans interstice à la paroi latérale (5) de la branche de boîtier (15) lorsqu'elles sont rabattues vers le bas, le module de toit pouvant être intégré sous forme de pièce complémentaire visible (2, 2') dans un plafond (1) réalisé sous forme de pièce moulée d'un véhicule automobile,
**caractérisé en ce que**
le module de toit est réalisé avec une partie de plafond (4),
les pare-soleil (6, 7) s'adaptent au module de toit (2) à gauche et à droite du module de toit (2) à une arête (9) du module de toit (2) avec leurs arêtes (8) de forme complémentaire à l'arête (9) du module de toit (2) lorsqu'elles sont rabattues sur le plafond (1) et
les pare-soleil (6, 7) s'engagent dans une rainure d'encliquetage (10) sur la partie de plafond (4) du module de toit (2) lorsqu'ils sont rabattus contre le plafond (1).

2. Module de toit selon la revendication 1,
**caractérisé en ce que**
la branche de boîtier (15) remplit l'espace entre le pare-brise (3) et le rétroviseur (11).

3. Module de toit selon la revendication 1 ou 2,
**caractérisé en ce que**
de préférence sa branche de boîtier (15) sert à recevoir des capteurs pour la pluie, l'ombrage, et similaires.

4. Module de toit selon l'une quelconque des revendications 1 à 3,
**caractérisé en ce que**
le rétroviseur (11) est réalisé de manière réglable électriquement.

5. Module de toit selon l'une quelconque des revendications 1 à 4,
**caractérisé en ce qu'**il
forme vers l'intérieur du véhicule une face frontale (12, 12') dans laquelle le rétroviseur (11) est intégré de telle sorte qu'il dépasse légèrement de celle-ci au maximum dans une position basculée.

6. Module de toit selon l'une quelconque des revendications 1 à 5,
**caractérisé en ce qu'**un
dispositif d'éclairage (14) est intégré dans sa partie de plafond (4, 4').
